# Europäisches Patentamt
## European Patent Office
## Office européen des brevets

(19)

(11) Veröffentlichungsnummer: **0 015 033**
**A2**

(12) **EUROPÄISCHE PATENTANMELDUNG**

(21) Anmeldenummer: **80200129.7**

(22) Anmeldetag: **15.02.80**

(51) Int. Cl.³: **A 23 G 1/20**
**A 23 G 3/20**

(30) Priorität: **21.02.79 BE 9284**

(43) Veröffentlichungstag der Anmeldung:
**03.09.80 Patentblatt 80/18**

(84) Benannte Vertragsstaaten:
**AT CH DE FR GB IT LU NL SE**

(71) Anmelder: **Olivier, Charles Pierre Arnold**
**Lage Kanaaldijk 23**
**Maastricht(NL)**

(72) Erfinder: **Olivier, Charles Pierre Arnold**
**Lage Kanaaldijk 23**
**Maastricht(NL)**

(74) Vertreter: **De Boer, Hindrik Geert Jan**
**De Lairessestraat 131-135 Postbus 5265**
**NL-1007 AG Amsterdam(NL)**

(54) Vorrichtung zum Füllen von Gussformen für Gegenstände aus Schokolade oder gleichartigem Material.

(57) Eine Vorrichtung zum Füllen von Gussformen für Gegenstände aus Schokolade oder gleichartigem Material, bestehend aus einem Tramsportmechanismus für die Gussformen mit darüber angeordneten Zufuhrorganen für die Gussmasse, dadurch gekennzeichnet, dass der Transportmechanismus die Gussformen mit den Stirnflächen aneinander über eine Führungsbahn fortbewegt, die mit verstellbaren Seitenwänden versehen ist, und dass die Zufuhrorgane unter anderem einen Abstreichkörper enthalten, der auf der Oberseite der Gussformen aufliegt.

EP 0 015 033 A2

0015033

-1-

# Vorrichtung zum Füllen von Gussformen für Gegenstände aus Schokolade oder gleichartigem Material

Die Erfindung bezieht sich auf eine Vorrichtung zum Füllen von Gussformen für Gegenstände aus Schokolade oder gleichartigem Material, bestehend aus einem Transportmechanismus für die Gussformen mit darüber angeordneten Zufuhrorganen für die Gussmasse.

Aus der niederländischen Patentschrift Nr. 100258 ist eine Vorrichtung mit einem Gussreservoir bekannt, bei der eine Wand des Gussreservoirs als Abstreichwand fungiert, die in der Bewegungsrichtung des Transportmechanismus hin und her bewegt werden kann. Diese hin und her bewegliche Abstreichwand dient dem Zweck, zu verhindern, dass die Zwischenräume zwischen den Formen mit Gussmasse gefüllt und die Formen verschmiert werden. Der nachteil dabei ist dass der für das Hin- und Herbewegen der Abstreichwand benötigte Mechanismus die Maschine durch die grosse Zahl seiner Bestandteile extra teuer macht.Ausserdem ist die Bauweise der Vorrichtung so beschaffen, dass nur Gussformen einer bestimmten Breite und Höhe benutzt werden können.

Die Erfindung bezweckt die Schaffung einer Vorrichtung, bei der die obengenannten Nachteile beseitigt sind und ausserdem das Verschmieren der Gussformen und sonstigen Bestandteile der Vorrichtung, beispielsweise durch überhöhte Zufuhr von Gussmasse, auf einfache Weise verhütet wird.

Gemäss der Erfingung bewegt der Transportmechanismus die Gussformen mit den Stirnflächen an einander über eine Führungsbahn fort, die vorzugsweise mit verstellbaren Seitenwänden
versehen ist, wobei die Zufuhrorgane einen Abstreichkörper
enthalten, der auf der Oberseite der Gussformen aufliegt.

Anhand der Zeichnung wird in einem Ausführungsbeispiel die
Vorrichtung gemäss der Erfindung näher erläutert.
Figur 1 zeigt einen Teil der Vorrichtung in Aufsicht.
Figur 2 zeigt eine Seitenansicht.
Figur 3 zeigt einen Längsschnitt in der in Figur 1 durch
III-III bezeichneten Ebene.
Die Gussformen 1 werden mittels eines nicht in die Zeichnung
aufgenommenen Transportmechanismus in Pfeilrichtung fortbewegt. Von einem Magazin aus, in dem die Gussformen aufgestapelt sind, werden die Gussformen mit den Stirnflächen
aneinandergelegt und danach über die Führungsbahn 2 fortbewegt, die mit verstellbaren Seitenwänden 3 versehen ist.
Über den Gussformen 1 ist der Abstreichkörper 4 angeordnet,
der mittels Stellschrauben 5 und Federn 6 auf der Oberseite
der Gussformen 1 aufliegt, wenn diese sich unter dem
Abstreichkörper befinden.
Der Abstreichkörper 4 hat über seine ganze Breite eine abgeschrägte Fläche 7.
Der Abstreichkörper 4 hat einen rinnenförmigen Verteilerraum
8 für die Gussmasse, der im Rinnenboden mit einem Ausströmspalt 9 versehen ist.
Die beiden freien Enden des Rinnenbodens gehen in die Abflussöffnungen 10 über.
Der Abstreichkörper 4 ist mit Heizelementen 11 versehen, mit
denen die Gussmasse auf Temperatur gehalten wird.
Die Zufuhr der Gussmasse zu dem rinnenförmigen Verteilerräum
8 erfolgt in der bekannten Weise aus einem Vorratsreservoir
durch einen Zufuhrtrichter 12.
Wenn die Vorrichtung in Betrieb gesetzt wird, bewegen
sich die Gussformen 1 in Pfeilrichtung mit den Stirnflächen
aneinander über die Führungsbahn 2 zwischen den Seitenwänden 3.

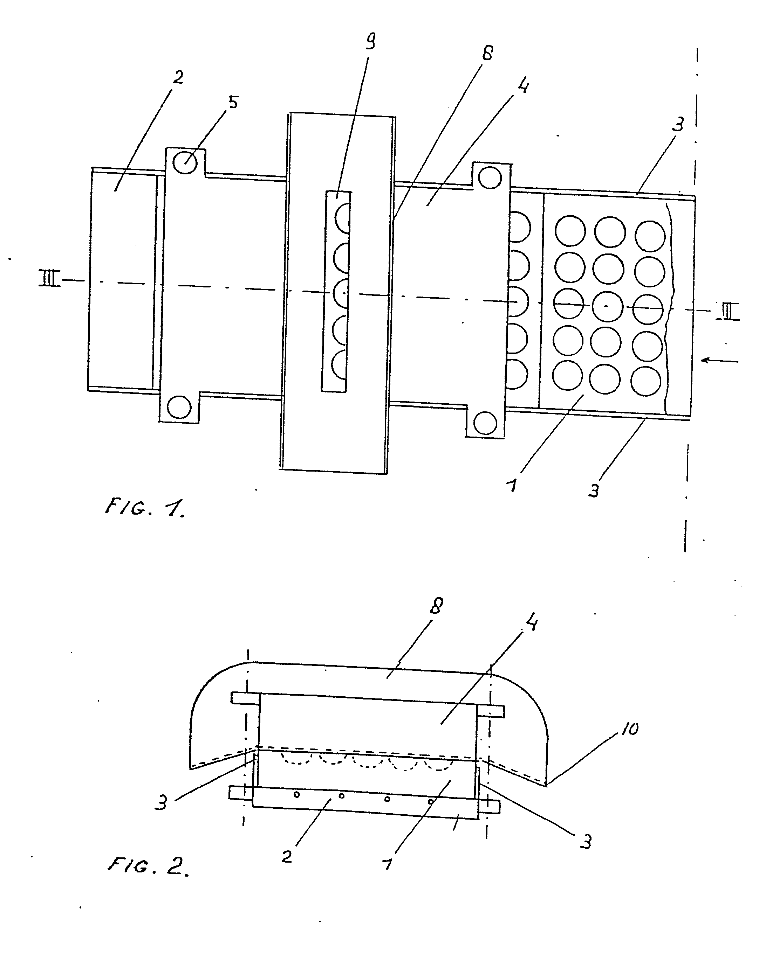

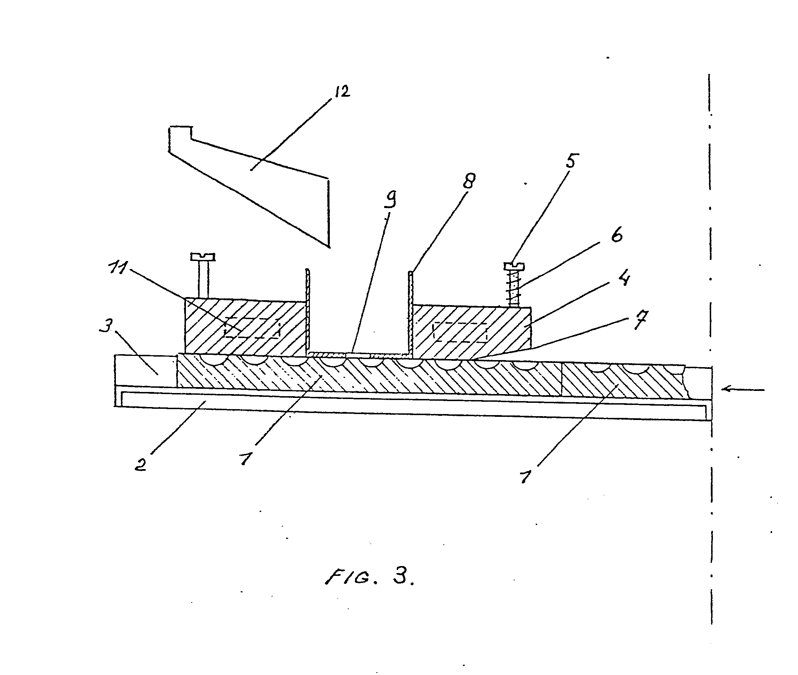

Die abgeschrägte Fläche 7 sorgt dafür, dass die Gussformen 1 leicht unter den Abstreichkörper 4 gleiten können, dessen Stellung sich unter dem Einfluss der Druckfedern 6 in vertikaler Richtung der Höhe der Gussformen 1 anpasst.

Ausserdem entfernt diese abgeschrägte Fläche etwaige Schokoladenreste, die sich auf den noch zu füllenden Gussformen festgesetzt haben, so dass ein genaues Aufliegen des Abstreichkörpers 4 auf den Gussformen gewährleistet ist, wodurch ein perfektes Abstreichen der Oberseite der Gussformen erzielt wird.

Da die Rinne und der Abstreichkörper so breit sind, dass sie die passierenden Gussformvertiefungen jeweils ganz bedecken, wird die Gussmasse aus diesen Vertiefungen nicht nach oben strömen, wenn der Abstreichkörper passiert worden ist, wie dies der Fall sein kann bei Verwendung einer vertikelen Abstreichplatte, bei der die Gussformvertiefung als Verbindungskanal zwischen dem Verteillerräum und dem Raum hinter der Abstreichplatte fungieren kann.

Die Gussmasse, die aus dem Zufuhrtrichter 12 in den rinnenförmigen Verteilerraum 8 gelangt, verteilt sich sofort in ihm und füllt durch den Ausströmspalt 9 die Gussform 1, wobei gleichzeitig überschüssige und abgestrichene Gussmasse durch die Abflussöffnungen 10 in ein Auffangreservoir unter der Vorrichtung zurückgeleitet wird.

Es ist offenkundig, dass mit der Vorrichtung gemäss der Erfindung keine einzige Gussform mit Gussmasse verschmiert wird, zumal da die Abflussöffnungen 10 sich in ausreichendem Abstand vom Transportmechanismus befinden.

Der Abstand zwischen den beiden Seitenwänden 3 ist verstellbar; das Einstellen kann mechanisch, pneumatisch, hydraulisch, elektrisch oder auf andere Weise erfolgen. Die Vorrichtung eignet sich daher für die Verwendung von Gussformen in mehreren Breiten.

Die bekannten, bislang handelsüblichen Gussformen haben eine Breite von 17,5 cm oder 13,5 cm. Der hierbei zu benutzende

Abstreichkörper 4 kann zum Beispiel durch die Abänderung der Abmessung des Ausströmspalts 9 in dem rinnenförmigen Verteilerraum 8 auf die gewünschte Breite abgestimmt werden.

-1-

Patentansprüche:

1. Vorrichtung zum Füllen von Gussformen für Gegenstände aus Schokolade oder gleichartigem Material, bestehend aus einem Transportmechanismus für die Gussformen mit darüber angeordneten Zufuhrorganen für die Gussmasse, dadurch gekennzeichnet, dass der Transportmechanismus die Gussformen mit den Stirnflächen aneinander über eine Führungsbahn fortbewegt, wobei die Zufuhrorgane einen Abstreichkörper enthalten, der auf der Oberseite der Gussformen aufliegt.

2. Vorrichtung gemäss Anspruch 1, dadurch gekennzeichnet, dass die Auflagefläche des Abstreichkörpers so breit ist, dass die passierenden Gussformvertiefungen jeweils ganz bedeckt werden.

3. Vorrichtung gemäss Anspruch 1, dadurch gekennzeichnet, dass der Abstreichkörper über seine gesamte Breite eine abgeschrägte Fläche (7) besitzt.

4. Vorrichtung gemäss Anspruch 1, dadurch gekennzeichnet, dass der Abstreichkörper einen rinnenförmigen Verteilerraum enthält, der im Rinnenboden mit einem Ausströmspalt versehen ist und dessen beide freie Enden in die Abflussöffnungen (10) übergehen.

5. Vorrichtung gemäss Anspruch 1, dadurch gekennzeichnet, dass der Abstreichkörper mit Heizelementen versehen ist.

6. Vorrichtung gemäss Anspruch 1, dadurch gekennzeichnet, dass die Führungsbahn mit verstellbaren Seitenwänden versehen ist, die auf die Gussformen abgestimmt werden können.

FIG. 1.

FIG. 2.

0015033

FIG. 3.